# EUROPÄISCHE PATENTANMELDUNG

(11) **EP 0 556 544 A1**
(43) Veröffentlichungstag der Anmeldung: **25.08.1993**
(21) Anmeldenummer: 93100170.5
(22) Anmeldetag: 08.01.1993
(51) Int. Cl.: H04L 27/00, H04M 1/00, H04M 11/06

(54) **Schaltungsanordnung zum Anschluss eines Sprach- oder Datenterminals an eine Uebertragungsleitung**

(30) Priorität: 18.02.1992 CH 483/92
(71) Anmelder: MARTIGNONI ELECTRONICS AG, CH-8004 Zürich (CH)
(72) Erfinder: Martignoni, Thomas, CH-8050 Zürich (CH)
(74) Vertreter: Patentanwälte Schaad, Balass & Partner AG

(57) **Zusammenfassung**

Die Schaltungsanordnung dient in der Regel zur Übertragung von analogen Signalen zwischen einem Modem und einer Telefonleitung. Zur galvanischen Trennung zwischen Modem und Telefonleitung ist für jede Übertragungsrichtung ein Optokoppler **(18, 19)**. vorhanden. Diesen sind Schaltungsmittel **(25, 28)** zum Stabilisieren ihrer Arbeitspunkte zugeordnet, so dass sie unabhängig von der Impedanz des jeweiligen Telefonnetzes auf dem linearen Teil ihrer Kennlinie arbeiten. Dadurch ist eine verzerrungsarme Übertragung gewährleistet.

## Beschreibung

Die Erfindung bezieht sich auf eine Schaltungsanordnung nach dem Oberbegriff des Anspruchs 1.

Eine solche Schaltungsanordnung überträgt in der Regel analoge Signale zwischen einem Modem im engeren Sinn des Begriffes und einer Telefonleitung. Sie dient im wesentlichen zur galvanischen Trennung zwischen dem Modem und der Übertragungsleitung und kann auch Bestandteil des Modems im weiteren Sinn des Begriffes sein. Bekannt ist eine solche Schaltungsanordnung auch unter der aus dem Englischen stammenden Abkürzung "DAA".

Eine aus der US 4,679,115 (Connan et al.) bekannte Schaltungsanordnung dieser Art weist im ersten und zweiten Schaltungsteil je einen Transformator auf. Jeder dieser Transformatoren hat eine Primärwicklung und zwei Sekundärwicklungen. Die Primärwicklungen dienen auf der einen Seite zum Anschluss an das Terminal und auf der anderen Seite zum Anschluss an die Übertragungsleitung. An den Sekundärwicklungen ist je ein Optokoppler primär- bzw. sekundärseitig angeschlossen. Ein dritter Optokoppler dient zur Übertragung von Anrufsignalen.

Durch die Verwendung von zwei Transformatoren, drei Optokopplern sowie von mehreren Relais ist diese bekannte Schaltungsanordnung sehr aufwendig und beansprucht viel Platz. Zudem kann der Schrift dieser bekannten Schaltungsanordnung kein Hinweis entnommen werden, wie sich durch Unlinearitäten der Optokoppler hervorgerufene harmonische Verzerrungen vermeiden bzw. reduzieren lassen.

Ferner ist aus der NL-A 90 00 490 (Michiel ter Burg Electronics B.V.) eine Schaltungsanordnung bekannt, die insgesamt fünf Optokoppler aufweist. Zudem wird bei dieser bekannten Schaltungsanordnung versucht, das Problem der genannten harmonischen Verzerrungen dadurch zu umgehen, dass das Signal auf der optischen Strecke nicht unmittelbar übertragen, sondern zuerst moduliert und dann demoduliert wird. Auch diese Schaltung ist finanziell und raummässig recht aufwendig.

Der Erfindung liegt die Aufgabe zugrunde, eine Schaltungsanordnung der eingangs genannten Art anzugeben, die mit relativ wenig Aufwand eine Anschaltung an weltweit unterschiedliche Übertragungsleitungen, insbesondere Telefonnetze, unter Einhaltung der jeweiligen Anforderungen an Impedanz und weitere länderspezifische Vorschriften ermöglicht.

Die gestellte Aufgabe wird erfindungsgemäss durch die im kennzeichnenden Teil des Anspruchs 1 angegebenen Merkmale gelöst.

In den abhängigen Ansprüchen sind bevorzugte Ausführungsformen der Erfindung beschrieben.

Die erfindungsgemässe Lösung gewährleistet eine optimale Übertragung analoger Signale, beispielsweise von Daten und auch von Sprache, bei geringsten harmonischen Verzerrungen, da sich die Optokoppler unabhängig von der Charakteristik des Netzes auf dem linearen bzw. geradlinigen Teil ihrer Kennlinie betreiben lassen.

Die erfindungsgemässe Schaltungsanordnung ist kostengünstig und beansprucht derart wenig Platz, dass sie sich beispielsweise auf einer Karte in der Grösse einer Speicherkarte (memory card) unterbringen lässt.

Anhand der Zeichnungen werden Ausführungsbeispiele der Erfindung näher erläutert. Es zeigt:
- Fig. 1: ein Blockschaltbild einer ersten Ausführungsform einer Schaltungsanordnung und
- Fig. 2: eine detailliertes Schaltbild einer zweiten Ausführungsform einer Schaltungsanordnung.

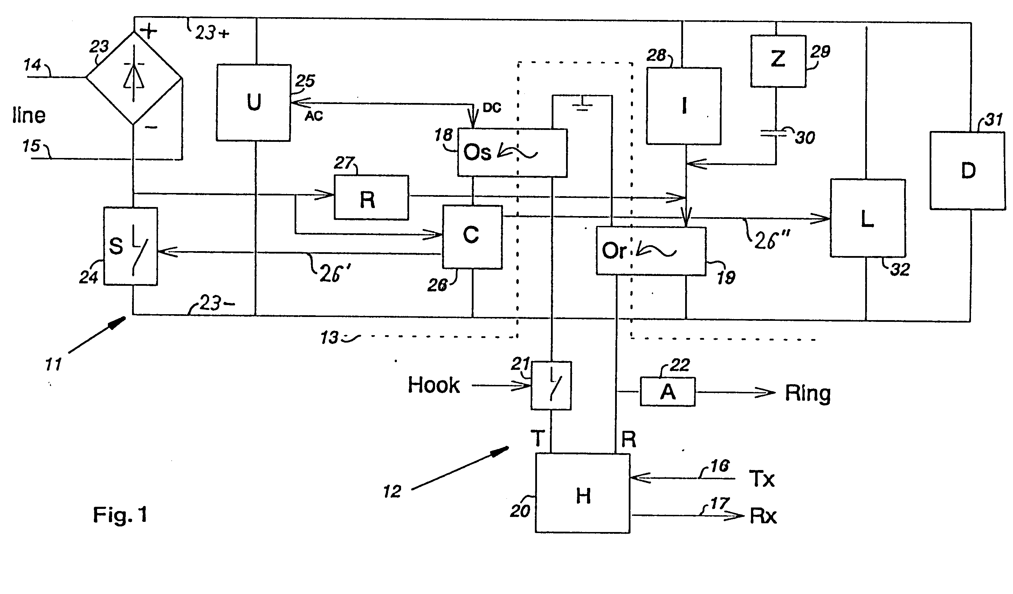

Die in der Fig. 1 dargestellte Schaltungsanordnung weist einen ersten Schaltungsteil **11** und einen zweiten Schaltungsteil **12** auf. Entlang der gestrichelten Linie **13** sind die beiden Schaltungsteile **11**, **12** galvanisch voneinander getrennt. Der erste Schaltungsteil **11** weist zum Anschluss an eine nicht dargestellte Übertragungsleitung, insbesondere eine Telefonleitung, Anschlüsse **14**, **15 (line)** auf, die in der Regel direkt durch einen Stecker oder einen weiteren Schalter, wie z.B. ein Relais oder einen Optokoppler, gebildet sind. Der zweite Schaltungsteil **12** ist mittels Signalleitungen **16**, **17** über ein nicht dargestelltes Modem mit einem ebenfalls nicht dargestellten Terminal, beispielsweise einem Computer, verbindbar.

Als galvanisch trennende Schaltungselemente dienen zwei optoelektronische Koppler **18**, **19**, **(Os, Or)** kurz Optokoppler genannt. Der erste Optokoppler **18** ist zum Senden und der zweite Optokoppler **19** zum Empfangen bestimmt. Das zum Senden bestimmte Signal wird über die zur Vereinfachung einadrig dargestellte Signalleitung **16** zugeführt und auf die Anschlüsse **14**, **15** übertragen. Das über die Anschlüsse **14**, **15** zugeführte Empfangssignal wird auf die Signalleitung **17** übertragen.

Zum erleichterten Verständnis wird der zweite Schaltungsteil **12** vorweg erläutert, da dieser im wesentlichen bekannte Bauelemente enthält.

Eine erweiterte Hybridschaltung **20 (H)** im zweiten Schaltungsteil **12** dient als Gabelschaltung zum Trennen von Empfangs- und Sendesignal. Darin wird aus dem Empfangssignal **R**, welches mit dem Sendesignal **T** überlagert ist, das reine Empfangssignal **R**_{**X**} abgeleitet. Ferner wird darin das zum Senden angelieferte Sendesignal **T**_{**X**} im Pegel derart beeinflusst, dass das abgehende Sendesignal **T** auf den ersten Optokoppler **18** gegeben werden kann.

Ferner weist der zweite Schaltungsteil **12** einen Schalter **21** und einen Anrufsignal-Detektor **22 (A)** auf. Der durch ein "Hook"-Signal steuerbare Schalter **21** dient über den Optokoppler **18** zum Anschalten der Schaltungsanordnung und damit zum Herstellen einer Verbindung. Als Hook-Signal wird dasjenige Signal bezeichnet, welches zum Halten der Verbindung dient, wie beispielsweise bei einem Telefonapparat bei abgenommenem Hörer. Der Schalter **21** ist zwischen den Ausgang für das Sendesignal **T** an der Hybridschaltung **20** und den ersten Optokoppler **18** geschaltet.

Der Anrufsignal-Detektor **22** liefert das ankommende Anrufsignal an eine nicht dargestellte Signaleinrichtung, beispielsweise eine Glocke. Dieser Detektor **22** ist an die Verbindungsleitung zwischen dem Eingang für das Empfangssignal **R** an der Hybridschaltung **20** und dem zweiten Optokoppler **19** angeschlossen. Die jeweils anderen dem zweiten Schaltungsteil **12** zugeordneten Anschlüsse der beiden Optokoppler **18**, **19** sind mit Masse verbunden.

Der erste Schaltungsteil **11** ist über eine GleichrichterBrückenschaltung **23** mit den Stecker-Anschlüssen **14**, **15** verbunden. Diese Brückenschaltung **23** bewirkt, dass die Schaltungsanordnung unabhängig von der Polarität der angeschlossenen Übertragungsleitung immer polaritätsrichtig am Telefonnetz angeschlossen wird. Der Pluspol **+** der Gleichrichter-Brückenschaltung **23** führt auf eine Plusleitung **23+**.

Der Minuspol der Gleichrichter-Brückenschaltung **23** führt über einen zweiten Schalter **24 (S)** auf eine Minusleitung **23-**. Der zweite Schalter **24** dient zur Herstellung einer Verbindung mit der Übertragungsleitung bzw. dem Telefonnetz (on-hook - off-hook) einerseits und zur Durchführung eines Wählvorganges andererseits.

Ein zwischen der Plusleitung **23+** und der Minusleitung **23-**angeschlossener Spannungsregler **25 (U)** betreibt den daran angeschlossenen ersten Optokoppler **18** mit einer festgelegten Gleichspannung **DC**. Damit ist der Arbeitspunkt des ersten Optokopplers **18** in angeschaltetem Zustand genau definiert und unabhängig vom Leitungsstrom. Ferner wird über den an den Spannungsregler **25** angeschlossenen ersten Optokoppler **18** dem Gleichspannungs-Leitungsstrom der Wechselspannungs-Signalstrom **AC** überlagert.

Ein zwischen den ersten Optokoppler **18** und der Minusleitung **23-** geschalteter Komparator **26 (C)** vergleicht den Ausgang des ersten Optokopplers mit einem festgelegten Wert, um in Abhängigkeit der Differenz dieser Werte den zweiten Schalter **24** über eine Steuerleitung **26'** anzusteuern.

Ein Schaltungselement **27 (R)** ist zwischen den Minuspol - der Gleichrichter-Brückenschaltung **23** und der Eingangsleitung zum zweiten Optokoppler **19** geschaltet. Es leitet das ankommende Anruf-Signal weiter. Es enthält Z-Dioden, mit denen die relativ hohe Anrufsignal-Spannung detektiert und auf den zweiten Optokoppler **19** gegeben wird. Für die Anforderungen einiger Länder kann es sinnvoll sein, das Anruf-Signal direkt von der Telefonleitung zu übernehmen. Dabei wird dieses Signal von **14**, **15** je über in Fig. 1 nicht dargestellte Z-Dioden, Kondensatoren und Widerstände auf den zweiten Optokoppler **19** geführt.

Eine mit der Plusleitung **23+** und der Eingangsleitung zum zweiten Optokoppler **19** verbundene Konstantstromquelle **28 (I)** dient zur Festlegung des Arbeitspunktes des zweiten Optokopplers **19**. Dabei wird der Signalstrom dem Arbeitspunktstrom überlagert.

Eine Wechselstrom-Impedanz **29 (Z)** in Reihe mit einer Kapazität **30** ist der Konstantstromquelle **28** parallelgeschaltet. Diese Impedanz **29** entspricht der gegen aussen (Anschlüsse **14**, **15**) wirksamen Impedanz und überlagert den Signalstrom über die Kapazität **30** auf den zweiten Optokoppler **19**.

Ein zwischen der Plusleitung **23+** und der Minusleitung **23-**geschalteter Gleichspannungs-Stabilisator **31 (D)** bestimmt die Gleichspannungsimpedanz der Schaltung. Falls damit die Strom-Spannungskurve so flach gelegt wird, dass die Gleichspannung mindestens annähernd als konstant betrachtet werden kann, trotz hoher Impedanz für Wechselspannung, so können der Spannungsregler **25** und/oder die Konstantstromquelle **28** weggelassen werden, um die Optokoppler **18**, **19** direkt anzuschliessen.

Über eine weitere Steuerleitung **26''** steuert der Komparator **26** einen zwischen der Plusleitung **23+** und der Minusleitung **23-** geschalteten Schaltungskreis 32 **(L)**. Dieser Schaltungskreis **32** bewirkt eine Reduktion der Impedanz bei relativ grosser Aussteuerung des ersten Optokopplers **18**. Damit wird einer Forderung in verschiedenen Ländern nachgekommen, dass während des Wählvorganges die Impedanz gesenkt werden muss.

Die zu dem genannten Zweck erforderliche Erhöhung des Stromes durch den ersten Optokoppler **18** kann mit einer dritten Position des Hook-Schalters **21** erzielt werden.

Im Blockschaltbild gemäss Fig. 1 sind zur Vereinfachung und zum besseren Verständnis die Blöcke funktional unabhängig voneinander dargestellt. In der Praxis ist es jedoch möglich, dass sich durch gemeinsam verwendete Bauteile Überlappungen ergeben.

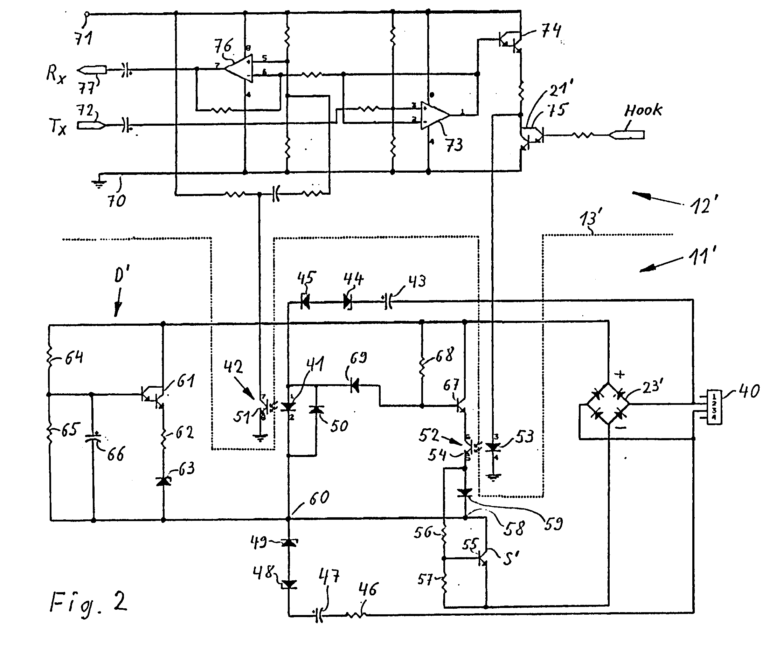

Die als weiteres Ausführungsbeispiel im Detail dargestellte Schaltungsanordnung nach der Fig. 2 dient dem gleichen Zweck wie diejenige nach der Fig. 1. Sie weist ebenfalls einen ersten Schaltungsteil **11'** und einen zweiten Schaltungsteil **12'** auf, die bei der gestrichelten Linie **13'** galvanisch voneinander getrennt sind.

Der erste Schaltungsteil **11'** wird über einen zum Einstecken in eine Telefonsteckdose bestimmten Anschlussstecker **40** mit einem Telefonnetz verbunden. Mit dem Anschlussstecker **40** sind intern eine Gleichrichter-Brückenschaltung **23'** und die Lumineszenzdiode **41** eines empfangsseitigen Optokopplers **42** verbunden. Über die Brückenschaltung **23'** wird der erste Schaltungsteil **11'** unabhängig von der jeweiligen Polarität der Telefonleitungen aus dem Telefonnetz mit Gleichstrom gespeist.

Katodenseitig sind der Lumineszenzdiode **41** ein Kondensator **43** und zwei voneinander mit ihren Katoden gegeneinandergerichtete Z-Dioden **44**, **45** in Reihe vorgeschaltet. Anodenseitig sind der Lumineszenzdiode **41** ein Widerstand **46**, ein Kondensator **47** und zwei mit ihren Katoden gegeneinandergerichtete Z-Dioden **48**, **49** in Reihe vorgeschaltet. Eine erste Diode **50** ist der Lumineszenzdiode **41** antiparallelgeschaltet.

Die Reihenschaltung aus den Schaltelementen **43**, **44**, **45**, **41**, **49**, **48**, **47**, **46** dient zur Übertragung des analogen Wechselstrom-Empfangssignals vom Anschlussstecker **40** auf den Optokoppler **42**. Vom Phototransistor **51** des Optokopplers **42** wird das Anrufsignal galvanisch getrennt auf den zweiten Schaltungsteil **12'** übertragen. Je nach Auslegung der Werte ist es empfehlenswert, während der On- und Off-Hook-Phase den Wert des den Arbeitspunkt des Phototransistors **51** bestimmenden Widerstandes umzuschalten, um immer im richtigen Arbeitspunkt zu halten.

Ein sendeseitiger Optokoppler **52** ist zur galvanischen Trennung des ersten **11'** vom zweiten Schaltungsteil **12'** mit seiner Lumineszenzdiode **53** mit dem zweiten Schaltungsteil **12'** und mit seinem Phototransistor **54** mit dem ersten Schaltungsteil **11'** verbunden.

Ein erster NPN-Transistor **55** dient als Schalter **S'**, um den von der Gleichrichter-Brückenschaltung **23'** gelieferten Gleichstrom auf den ersten Schaltungsteil **11'** zu dessen Speisung durchzuschalten. Über einen mit seiner Basis verbundenen Widerstand **56** wird dieser Transistor **55** durchgesteuert, sobald der sendeseitige Optokoppler **52** ein Signal überträgt. Ein Basiswiderstand **57** ist mit dem Minuspol - der Gleichrichter-Brückenschaltung **23'** verbunden. Diese Schaltung dient dem Anschalten des ganzen Schaltungskreises ans Netz.

Zwischen der Minusleitung **58** der durch den ersten Transistor **55** durchgeschalteten Speisespannung und der Anode des Phototransistor **54** des sendeseitigen Optokopplers **52** ist eine zweite Diode **59** in Durchlassrichtung geschaltet. Mit der Minusleitung **58** ist auch der Verbindungspunkt **60** zwischen der Anode der Lumineszenzdiode **41** des empfangsseitigen Optokopplers **42**, der Katode der ersten Diode **50** und der Anode der Z-Diode **49** verbunden.

Ferner ist zwischen der Minusleitung **58** und den Pluspol **+** der Gleichrichter-Brückenschaltung **23'** eine Gleichspannungs-Stabilisatorschaltung **D'** angeordnet, die einen NPN-Darlington-Transistor **61**, einen Widerstand **62** und eine weitere Z-Diode **63** in Reihe, sowie einen aus Widerständen **64**, **65** bestehenden Basisspannungsteiler und einen Kondensator **66** zwischen der Basis dieses Transistors **61** und der Minusleitung **58** aufweist.

Zwischen den Pluspol **+** der Gleichrichter-Brückenschaltung **23'** und der Katode des Phototransistor **54** des sendeseitigen Optokopplers **52** ist ein weiterer NPN-Transistor **67** geschaltet, dessen Basis über eine Impedanz **68**, welche zugleich die Wechselstromimpedanz der Schaltung am Telefonnetz bestimmt, mit dem Pluspol **+** der Gleichrichter-Brückenschaltung **23'** und mit der Katode einer dritten Diode **69** verbunden ist. Die Anode dieser Diode **69** ist mit dem Verbindungspunkt zwischen der Katode der Lumineszenzdiode **41** des empfangsseitigen Optokopplers **42** und der Anode der Z-Diode **45** sowie der Anode der ersten Diode **50** verbunden. Über die Diode **69** wird von der Wechselstrom-Impedanz **68** kommend das Empfangssignal auf den Optokoppler **42** übertragen.

Der zweite Schaltungsteil **12'** ist im wesentlichen konventioneller Bauart und dient als hybride Gabelschaltung. Im Gegensatz zum ersten Schaltungsteil **11'** ist der zweite Schaltungsteil **12'** geerdet bzw. mit einer Masseleitung **70** verbunden. Zur Speisung mit Gleichstrom von einem nicht dargestellten Terminal dient ein Anschluss **71**.

Über einen Anschluss **72** wird vom Terminal bzw. einem nicht dargestellten Modem das Sendesignal **T**_{**X**} zugeführt und auf den Eingang eines Empfangsverstärkers **73** gegeben. Von diesem gelangt das Sendesignal über einen NPN-Darlington-Transistor **74** und einen als Schalter **21'** dienenden weiteren NPN-Darlington-Transistor **75** auf den sendeseitigen Optokoppler **52** des ersten Schaltungsteils **11'**. Dieses Schalter **21'** wird durch ein bereits genanntes Haltesignal **(Hook)** angesteuert.

Das über den Anschlussstecker **40** zugeführte Empfangssignal gelangt vom empfangsseitigen Optokoppler **42** auf den Eingang eines Empfangsverstärkers **76** des zweiten Schaltungsteils **12'** und wird über einen weiteren Anschluss **77** als Empfangssignal **R**_{**X**} auf den genannten Terminal bzw. das genannte Modem gegeben.

Mit dem "Hook"-Schalter **S** bzw. **S**' (Fig. 1 bzw. 2) kann der sendeseitige Optokoppler **18** bzw. **52** und damit die ganze Anschaltung auf eine hohe Impedanz geschaltet werden. Weist man diesem Schalter nicht nur die Werte offen und geschlossen zu, sondern auch Zwischenwerte, so kann der Leitungsstrom in beschränktem Umfang mitgeregelt werden.

Dadurch dass verschiedene Bauteile mehrere Funktionen gleichzeitig übernehmen, kann der Schaltungsaufwand sehr klein gehalten werden, trotzdem wirkt sich eine Änderung der Gleichstrom-Impedanz nicht auf die Wechselstrom-Impedanz aus. Durch entsprechende Beschaltung ist das Problem der Nichtlinearität der optischen Bauteile und damit der harmonischen Verzerrungen weitgehend gelöst.

Durch das Hook-Signal und den Schalter **S**' wird festgelegt, ob die Schaltung eingeschaltet oder ob sie hochohmig ist.

Die Schaltkreise um **U** und **I** und **D** gemäss Fig. 1 sind wechselstrommässig hochohmig. Damit kann die Wechselstrom-Impedanz direkt mit **Z** bestimmt werden.

Zu erwähnen ist noch, dass die den Optokopplern 18, 19; 42, 52 zugeordneten bzw. vorgeschalteten Schaltungsteile oder Schaltkreise keine Operationsverstärker aufweisen.

## Patentansprüche

1. Schaltungsanordnung zum Anschluss eines Sprach- oder Daten-Terminals an eine Übertragungsleitung, insbesondere an eine Telefonleitung, mit zwei mittels Optokopplern **(18, 19; 42, 52)** galvanisch voneinander getrennten Schaltungsteilen **(11, 12; 11', 12')**, von denen der erste **(11; 11')** der Übertragungsleitung und der zweite **(12; 12')** dem Terminal zugeordnet ist, **dadurch gekennzeichnet**, dass den Optokopplern **(18, 19; 42, 52)** erste Schaltungsmittel **(25, 28; 67, 68, 69)** zum Stabilisieren ihrer Arbeitspunkte zugeordnet sind und/oder dass der erste Schaltungsteil **(11; 11')** zweite Schaltungsmittel **(31; 61, 62, 63, 64, 65, 66)** zum selbsttätigen Anpassen seiner Gleichstrom-Impedanz an die Charakteristik der Übertragungsleitung aufweist.

2. Schaltungsanordnung nach Anspruch 1, dadurch gekennzeichnet, dass die ersten Schaltungsmittel eine Gleichstromquelle (28) aufweisen, die einen konstanten den Arbeitspunkt des zweiten Optokopplers (19) bestimmenden Strom erzeugt.

3. Schaltungsanordnung nach Anspruch 1 oder 2, dadurch gekennzeichnet, dass die ersten Schaltungsmittel eine Spannungsquelle (25) aufweisen, die eine konstante Spannung über dem zweiten Optokoppler (18) erzeugt.

4. Schaltungsanordnung nach einem der vorstehenden Ansprüche, dadurch gekennzeichnet, dass die Optokoppler **(18, 19; 42, 52)** sowohl für Signalübertragung von Daten- und/oder Sprache als auch für die Übertragung von Schaltfunktionen, insbesondere zur Herstellung und/oder Aufrechterhaltung von Verbindungen, eingerichtet sind.

5. Schaltungsanordnung nach einem der vorstehenden Ansprüche dadurch gekennzeichnet, dass im ersten Schaltungsteil **(11, 11')** zwischen einer eingangsseitigen Gleichrichter-Brückenschaltung **(23; 23')** und den übrigen Schaltungselementen ein steuerbarer Schalter **(24; 55)** zur Durchschaltung einer Verbindung angeordnet ist.

6. Schaltungsanordnung nach Anspruch 5, dadurch gekennzeichnet, dass der steuerbare Schalter **(24; 55)** durch den sendeseitigen Optokoppler **(18; 52)** ansteuerbar ist.

7. Schaltungsanordnung nach einem der vorstehenden Ansprüche, dadurch gekennzeichnet, dass die ersten Schaltungsmittel **(25, 28; 67, 68, 69)** derart bemessen sind, dass die Arbeitspunkte der Optokoppler **(18, 19; 42, 52)** jeweils auf dem linearen Teil ihrer Kennlinie stabilisiert sind.

8. Schaltungsanordnung nach einem der vorstehenden Ansprüche, dadurch gekennzeichnet, dass die zweiten Schaltungsmittel **(31; 61, 62, 63, 64, 65, 66)** mindestens ein Schaltungselement **(61, 63)** zum Regeln der Gleichspannung aufweisen.

9. Schaltungsanordnung nach Anspruch 8, dadurch gekennzeichnet, dass die zweiten Schaltungsmittel **(31; 61, 62, 63, 64, 65, 66)** derart bemessen sind, dass sie eine vom Gleichstrom nahezu unabhängige, weitgehend konstante Spannung erzeugen.

10. Schaltungsanordnung nach Anspruch 8 oder 9, dadurch gekennzeichnet, dass das Schaltungselement eine, die von der Übertragungsleitung gelieferte Gleichspannung begrenzende Diode **(63)** und Schaltungsmittel **(66)** zum Erhöhen der Impedanz für Wechselspannung aufweist.

11. Schaltungsanordnung nach einem der vorstehenden Ansprüche, dadurch gekennzeichnet, dass die zweiten Schaltungsmittel **(31; 61, 62, 63, 64, 65, 66)** derart bemessen sind, dass sie für Wechselstrom eine hohe Impedanz aufweisen.

12. Schaltungsanordnung nach einem der vorstehenden Ansprüche, dadurch gekennzeichnet, dass die ersten Schaltungsmittel **(25, 28)** derart bemessen sind, dass sie für Wechselstrom eine hohe Impedanz aufweisen.

13. Schaltungsanordnung nach einem der vorstehenden Ansprüche, dadurch gekennzeichnet, dass der erste Schaltungsteil **(11; 11')** eine Wechselstrom-Impedanz **(29; 68)** aufweist.

14. Schaltungsanordnung nach Anspruch 13, dadurch gekennzeichnet, dass die Wechselstrom-Impedanz **(29; 68)** derart geschaltet ist, dass der sie durchfliessende Strom mindestens teilweise durch den zweiten bzw. Empfangs-Optokoppler **(19; 42)** fliesst.

15. Schaltungsanordnung nach Anspruch 1, dadurch gekennzeichnet, dass die ersten Schaltungsmittel keinen Operationsverstärker aufweisen.
